# EUROPÄISCHE PATENTSCHRIFT

(11) **EP 2 894 361 B1**
(45) Veröffentlichungstag und Bekanntmachung des Hinweises auf die Patenterteilung: **05.10.2016**
(21) Anmeldenummer: 14002787.1
(22) Anmeldetag: 09.08.2014
(51) Int. Cl.: F16D 3/202, F16D 3/205

(54) **Tripodgelenk mit segmentierten Rollkörpern**
Tripod joint with segmented rolling bodies
Articulation tripode dotée de galets segmentés

(30) Priorität: 19.08.2013 DE 102013216352
(43) Veröffentlichungstag der Anmeldung: 15.07.2015
(73) Patentinhaber: Capital Technology Beteiligungs GmbH, 8600 Bruck an der Mur (AT)
(72) Erfinder: Knopf, Philipp, 7034 Zillingtal (AT); Seidl, Stefan, 8045 Graz (AT)
(74) Vertreter: Kovac, Werner

(56) Entgegenhaltungen:
- FR-A5- 2 154 965
- GB-A- 2 226 102
- JP-A- H04 307 116

## Beschreibung

Die Erfindung betrifft ein Tripodgelenk, das ein mit einer Welle drehfest verbundenes Tripod und einen Außenteil umfasst, wobei das Tripod drei zylindrische Zapfen aufweist, auf denen diese einteilig umschließende Rollkörper drehbar gelagert sind, und der Außenteil beiderseits der Rollkörper Rollbahnen für diese aufweist. Derartige Gelenke werden beispielsweise beim Antrieb unabhängig aufgehängter Räder eines Kraftfahrzeuges eingesetzt. Sie sollen die Drehbewegung der Welle beispielsweise des Differentials, in eine unabhängig von der Einfederung und Winkelstellung der Radachse möglichst (wenn auch nicht ganz) gleichförmige Drehung des Rades übertragen.

Allgemein wird zwischen zwei Grundbauarten derartiger Gelenke unterschieden: Bei der als "AAR" (Abkürzung für "angular adjusted roller") bezeichneten Bauweise können die Rollkörper in ihrer Rollbahn nicht kippen, weshalb sie sphärisch gelagert sein müssen, zum Beispiel auf sphärischen Zapfen. Bei der als "GI" (Abkürzung für "Glänzer inerior") bezeichneten Bauweise haben die Rollkörper in der Rollbahn eine gewisse Bewegungsfreiheit, die Zapfen können zylindrisch sein. Erstere haben mehr und kompliziertere Teile, sind daher aufwändiger und haben mehr aneinander reibende Flächen, höhere Reibungsverluste sind die Folge; siehe z.B. DE 38 36 089. Die vorliegende Erfindung handelt von der letzteren Bauweise, GI, die in der Herstellung einfacher ist und geringere Reibungsverluste verursacht.

### Stand der Technik

Aus der DE 33 09 551 A1 ist ein Tripodgelenk bekannt, dessen Rollkörper in zwei an zylindrischen Zapfen geführte Rollsegmente unterteilt sind, die sich jeweils nur über einen Zentriwinkel von etwa 90 Winkelgraden erstrecken. Bei der Übertragung eines Drehmomentes wirkt jeweils nur eines der beiden Segmente kraftschlüssig mit der Rollbahn zusammen, das andere Segment ist frei. Bei einem Lastwechsel könnte es sich in einer kinematisch nicht korrekten Stellung befinden. Daher sind Vorrichtungen vorgesehen, die einzelne Segmente in ihrer Mittenstellung (entsprechend nicht ausgelenkter Welle) stabilisieren und sie dieser Freiheit berauben. Dazu sind verschiedene komplizierte und filigrane Vorrichtungen beschrieben, die die an sich schon schwierige Montage der Segmente weiter erschweren. Eine weitere Schwierigkeit bereitet die Montage der segmentierten Nadellager. Weil sich die Rollkörper - Segmente bei Auslenkung der Welle neigen, sind die Rollbahn als räumlich gekrümmte Fläche ausgebildet, was die Herstellung weiter verteuert und den Ausgleich axialer Verschiebungen der Welle unmöglich macht.

Die FR 2.154.965 zeigt ein Tripodgelenk, dessen Tripod auf zylindrischen Zapfen diese einteilig umschließende drehbar gelagerte Rollkörper hat, die mit langen Rollbahnen eines Außenteils zusammenwirken. Die GB 2 226 102 offenbart ein Tripodgelenk, dessen Rollelemente, welche jeweils auf einem Innenelement drehbar gelagert sind, welches seinerseits schwenkbar, aber nicht verdrehbar, auf einem sphärischen Zapfen gelagert ist. Das in der DE 41 02 001 beschriebene Tripod hat Rollkörper mit rundum ununterbrochener Rollfläche.

### Problem/Lösung

Es ist daher Aufgabe der Erfindung, ein gattungsgemäßes Tripodgelenk so auszubilden, dass es bei kürzester Einbaulänge und geringerem Gewicht möglichst einfach in Auf- und Zusammenbau, zuverlässig und reibungsarm ist. Erfindungsgemäß wird das mit ihre Zapfen einteilig umschließenden Rollkörpern dadurch erreicht, dass die Rollkörper durch Abflachungen in Umfangsrichtung voneinander getrennte Rollflächen aufweisen und dass der Verdrehwinkel der Rollkörper auf ihren Zapfen begrenzt ist.

Dank der rundum geschlossenen Rollkörper fallen die Vorrichtungen zur Verbindung der Rollkörper - Segmente des Standes der Technik fort. Die gegenüber liegenden Rollflächen eines Rollkörpers sind zu einander immer in der richtigen Position. Die Begrenzung des Verdrehwinkels der Rollkörper stellt den Kontakt der Rollfläche mit der Rollbahn im Außenteil des Gelenks unter allen Umständen sicher, sie entspricht dem von den Rollflächen überspannten Zentriwinkel. Zudem würde sie auch eine axiale Verschiebung der Welle erlauben, soferne das erwünscht sein sollte. Die Abflachungen der Rollkörper zwischen den Rollflächen führen zu einer erheblichen Reduktion der Einbaulänge und zu einer Gewichtsreduktion. Die die Zapfen rundum umschließenden Rollkörper erlauben vollnadelige Nadellager, also Lagernadeln rundum die Zapfen.

In Weiterbildung der Erfindung sind die Rollflächen der Rollkörper Kugelkalotten, wobei der Kugelmittelpunkt in der Symmetrieachse der Zapfen liegt, und sind die Rollbahnen im Außenteil Kreiszylinder, deren Erzeugenden in nicht ausgelenkter Stellung des Gelenks parallel zur Achse der Welle sind. Das ergibt eine wesentliche Vereinfachung der Fertigung. Der Radius der Kreiszylinder ist so gewählt, dass ihre Mittenachse die Symmetrieachse der Zapfen kreuzt, die Krümmungsradien von Rollbahn und Rollfläche also gleich sind. Dank der gleichen Krümmungsradien ist auch bei geneigtem Rollkörper Linienberührung zwischen den beiden Flächen sichergestellt. Das wäre sie dank der zylindrischen Rollbahnen auch bei Längsverschiebung der Welle. Dank der satten Berührung kann ein höheres Drehmoment übertragen werden als bei Punktberührung. Sehr großen zu übertragenden Umfangskräften und einer damit einhergehenden leichten Abplattung der Rollflächen der Rollkörper kann dadurch Rechnung getragen werden, dass der Krümmungsradius der Rollbahn geringfügig größer als der der Kugelkalotte gewählt wird. Das ist in Anspruch 2 mit dem Zusatz "im Wesentlichen" gemeint.

In einer bevorzugten Ausgestaltung können die kugelkalottenförmigen Rollflächen (20,21) der Rollkörper (6) an ihren Umfangsrändern tangential, also ohne Bildung einer Kante, in Übergangsflächen (21') mit kleinerem Krümmungsradius übergehen. Dadurch ist auch bei Abplattung der Rollflächen unter last und bei Auslenkung der Welle sichergestellt, dass kein Kantentragen auftritt.

Die Beschränkung des möglichen Drehwinkels der Rollkörper kann auf verschiedene Weise erfolgen. Sie kann etwa mittelbar durch am Außenteil angebrachte Elemente beschränkt sein. Das ist nachteilig, weil aufwendig in Fertigung und Montage und nur für kleine Winkelauslenkungen darstellbar. Diese Nachteile fallen bei am Tripod angebrachten Elementen fort. Daher sind erfindungsgemäß an den Rollkörpern zwei einander zugekehrte Anschlagflächen ausgebildet, an denen mit dem Tripod beziehungsweise dessen Welle fest verbundene Sperrfinger angreifen, die in Umfangsrichtung der Rollkörper schmäler sind als der Abstand der Anschlagflächen voneinander. Diese Differenz bestimmt den möglichen Verdrehwinkel der Rollkörper. Wesentlich ist, dass die Beschränkung bezüglich des Tripods beziehungsweise dessen Welle (die in der Regel die Antriebswelle ist) und nicht bezüglich des Außenteiles erfolgt. Die Anschlagflächen können an verschiedenen Stellen der Rollkörper ausgebildet sein; etwa an deren radial inneren Boden- oder Deckflächen, und die Finger an entsprechenden Stellen des Tripods.

Vorzugsweise aber sind die Anschlagflächen an den Abflachungen am Umfang der Rollkörper als Seitenwände einer in Richtung der Symmetrieachse der Zapfen verlaufenden Nut ausgebildet. So greifen die Finger an einem möglichst großen Abstand von der Drehachse an Anschlagflächen am Außenumfang der Rollkörper an, wo sie zugleich mit den Abflachungen leicht bearbeitet werden können.

Entsprechend können auch die Sperrringe sehr einfach gestaltet sein, etwa als ebener Stanzteil, der aus einem Ring mit drei abstehenden Fingern besteht. Der Ring ist mit der Welle oder dem Tripod selbst drehfest verbunden. Wenn das Tripod mittels Kuppelzähnen mit seiner Welle drehfest verbunden ist, ist vorzugsweise der Ring am Ende der Welle auf dieselben Kuppelzähne der Welle montiert, beispielsweise aufgepresst.

Alternativ kann der Ring aber auch an der der Welle zugekehrten Seite des Tripod auf den Kuppelzähnen der Welle sitzen oder gar mit ihr einstückig sein. Dann sind einfach die Sperrfinger auf der Welle oder auf der Tripodnabe ausgebildet.

### Figuren

Im folgenden wird die Erfindung anhand von Abbildungen beschrieben und erläutert. Es stellen dar:
Fig. 1: Eine Ausführungsform des erfindungsgemäßen Gelenks, in axonometrischer Explosionsdarstellung,
Fig. 2: Wie Fig. 1, betriebsbereit und ohne Außenteil,
Fig. 3: Stirnansicht nach III in Fig. 2, mit Außenteil,
Fig. 4: Schnitt nach IV-IV in Fig. 3,
Fig. 5: Schnitt nach V-V in Fig. 3,
Fig. 6: Einen Schnitt wie Fig. 6, ausgelenkt.

### Beschreibung

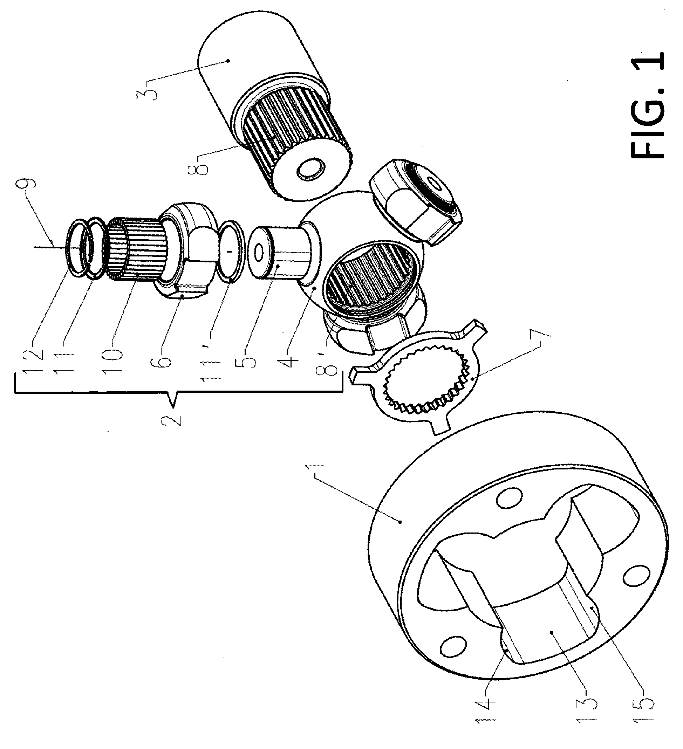

In **Fig.1** ist ein Außenteil 1 ohne Anbauten dargestellt. Solche Anbauten könnten beispielsweise Radnabenteile eines Kraftfahrzeuges sein. Der Außenteil 1 ist ein flacher Zylinderring mit parallelen Seitenflächen und drei Ausschnitten 13, die jeweils eine erste Rollbahn 14 und ihr zugewandt eine zweite Rollbahn 15 bilden. Die Ausschnitte 13 sind in der abgebildeten Ausführung zylindrisch, ihre Erzeugenden sind parallel zur Längsachse des nicht ausgelenkten Gelenkes. Sie könnten aber auch räumlich gekrümmte Flächen sein. Im Folgenden entspricht die x-Richtung der Längsachse. Die Erzeugenden verlaufen somit in x-Richtung.

Der innere Teil des Gelenkes ist eine Welle 3, beispielsweise eine Radantriebswelle, und ein Tripod 2 mit Rollkörpern 6. Das Tripod 2 ist eine mit der Welle 3 über Kuppelzähne 8 drehfest verbundene Nabe 4 mit drei zylindrischen Zapfen 5, deren Mittelachsen 9 miteinander jeweils einen Winkel von 120 Grad einschließen. Die Mittenachse 9 des explodierten vertikalen Zapfens 5 entspricht im Koordinatensystem der y-Achse. Auf den Zapfen 5 ist jeweils ein Rollkörper 6 drehbar gelagert, hier mit einem Nadellager 10. Beilagscheiben 11, 11' begrenzen das Nadellager. Ein Sicherungsring 12 bildet den Abschluss. Nabe 4 und Welle 3 können auch einstückig sein. Ein Sperrring 7 sitzt auf den Kuppelzähnen 8, auf ihn ist anhand der folgenden Figuren zurückzukommen.

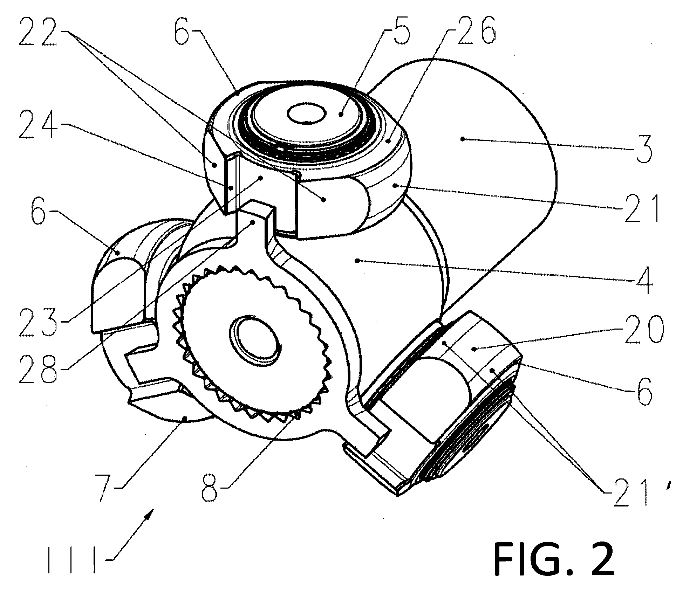

Anhand der **Fig. 2** werden die Rollkörper 6 beschrieben. Da die drei Rollkörper identisch sind, werden für alle drei dieselben Bezugszeichen verwendet. Den Umfang der Rollkörper 6 bilden zwei einander gegenüberliegende Rollflächen 20, 21 und dazwischen Abflachungen 22. Die Abflachungen 22 reduzieren die Länge des Rollkörpers und damit des ganzen Gelenkes in x-Richtung. Begrenzt werden die Rollflächen 20,21 und die Abflachungen 22 durch eine Deckfläche 26 und eine (nicht sichtbare) Bodenfläche 27. Deren Abstand in Richtung der Zapfenachse kann etwas geringer sein als die Länge der Lagernadeln 10. Die Rollflächen 20, 21 gehen hier an ihren beiderseitigen Umfangsrändern (in x-Richtung oben und unten) in Übergangsflächen 21' geringeren Krümmungsradius über.

Die in Fig. 2 vordere Abflachung 22 ist von einer Nut 23 unterbrochen, deren Seitenwände Anschlagflächen 24, 25 bilden. Vor der Nabe 4 sitzt auf den Kuppelzähnen 8 ein Sperrring 7, dessen drei Sperrfinger 28 jeweils in eine Nut 23 ragen. Der Sperrring 7 kann aus einem ebenen Blech ausgestanzt sein. Die Breite der Sperrfinger 28 ist geringer als der Abstand der Anschlagflächen 24, 25 voneinander. Das erlaubt den Roll-körpern 6 einen Verdrehwinkel, der maximal dem Bogenmaß der Rollflächen 20,21 entsprechend gewählt ist.

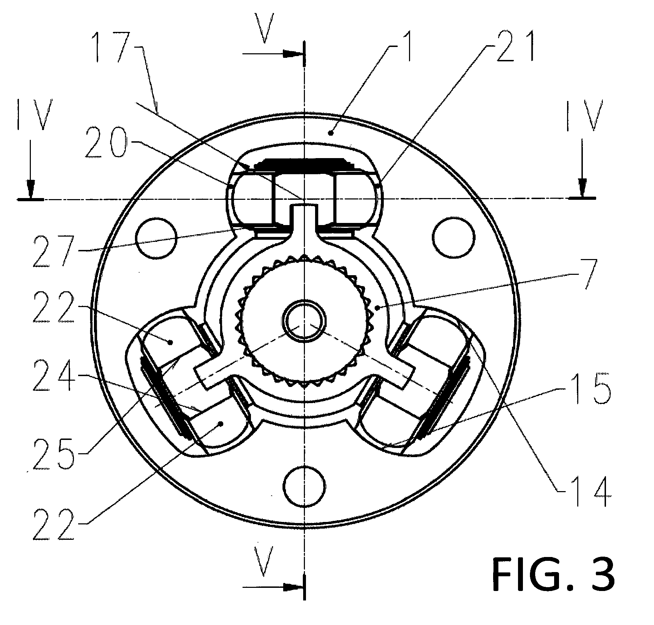

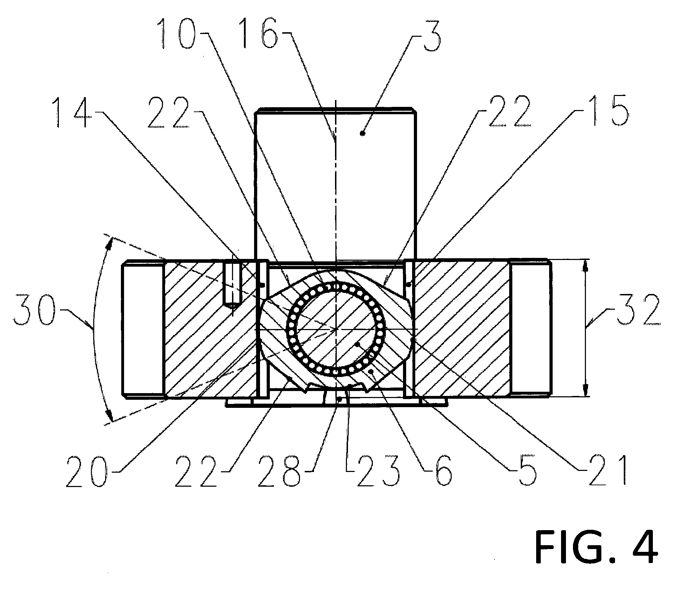

Anhand der **Fig. 3** werden die geometrischen Verhältnisse beschrieben. Die Rollbahnen 14, 15 im Außenteil 1 sind hier Zylinderflächen mit der Krümmungsmittenachse 16 (siehe Fig. 4), die die Mittenachse 9 der Zapfen 5 schneidet, und mit Erzeugenden parallel zur x-Achse. Der Krümmungsradius der Rollbahnen 14,15 ist durch den Krümmungsstrahl 17 angezeigt. Die Rollflächen 20, 21 der Rollkörper 6 sind Kugelkalotten, deren Krümmungsmittelpunkt in der Krümmungsmittenachse 16 der Rollbahnen liegt. Zwischen Rollbahnen 14, 15 und Rollflächen 20, 21 herrscht wegen des gleichen Krümmungsradius Linienberührung, auch bei ausgelenktem Gelenk, wenn die Rollkörper 6 bezüglich der Rollbahnen 14,15 geneigt sind. Auch das ist wegen der gleichen Krümmungsradien unproblematisch. Bei besonders hoher Belastung können die anhand von Fig. 2 beschriebenen Übergangsflächen 21' vorgesehen sein beziehungsweise der Krümmungsradius der Rollbahnen etwas vergrößert.

In **Fig. 4** ist ein Rollkörper 6 in Draufsicht zu sehen. Seine einander gegenüberliegenden Rollflächen 20, 21 überspannen jeweils einen Zentriwinkel 30. Man erkennt, dass dank der Abflachungen 22 die Länge 32 des ganzen Gelenkes in x-Richtung stark reduziert ist.

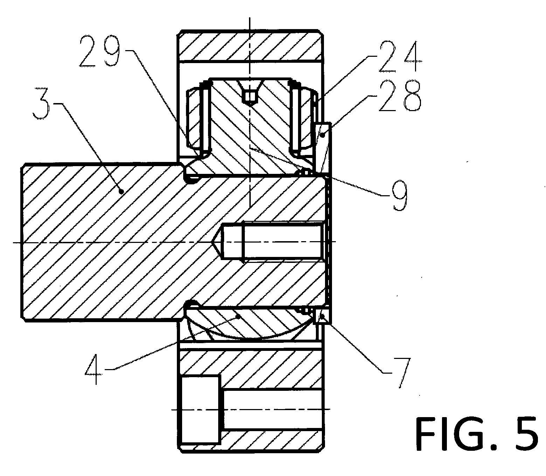

In **Fig. 5** ist ein Zapfen 5 mit seinem Rollkörper 6 zu sehen. Auf der im Bild rechten Seite ist der Sperrring 7 mit einem Sperrfinger 28 und dahinter die Anschlagfläche 24 erkennbar. Der Sperrring kann alternativ auch an der Schulter 33 der Welle 3 anliegend angeordnet beziehungsweise mit ihr einstückig sein. sein. Dann ist die Nut 23 an der gegenüber liegenden Abflachung 22 des Rollkörpers 6.

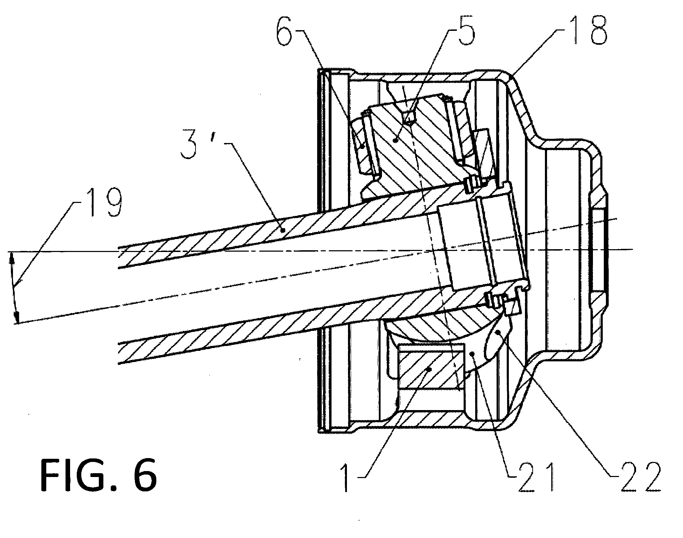

In **Fig. 6** ist das erfindungsgemäße Gelenk in ausgelenktem Zustand abgebildet. Die Welle 3', hier eine Hohlwelle, schließt mit der Mittellinie des Außenteils 1 einen Winkel 34 ein. Um denselben Winkel ist auch die Mittenachse 9 der Rollkörper 6 zu seiner hier nicht sichtbaren Rollbahn geneigt. Der Außenteil 1 ist hier mit Anbauten, nämlich einer Radnabe 35 dargestellt. Weitere Teile, die eine axiale Verlagerung der Welle 3 verhindern oder begrenzen, sind weggelassen.

Beschrieben wurde eine bevorzugte Ausführungsform der Erfindung, von der im Rahmen der Patentansprüche in mancherlei Weise abgewichen werden kann. Insgesamt wird so bei kürzester Einbaulänge ein einfaches, zuverlässiges und besonders reibungsarmes Gelenk geschaffen.

## Patentansprüche

1. Tripodgelenk, das ein mit einer Welle (3) drehfest verbundenes Tripod (2) und einen Außenteil (1) umfasst, wobei das Tripod (2) zylindrische Zapfen (5) aufweist, auf denen diese einteilig umschließende Rollkörper (6) drehbar gelagert sind, und der Außenteil (1) beiderseits der Rollkörper (6) Rollbahnen (14,15) für diese aufweist, **dadurch gekennzeichnet, dass** die Rollkörper (6) durch Abflachungen (22) in Umfangsrichtung voneinander getrennte Rollflächen (20,21) aufweisen und dass der Verdrehwinkel (30) der Rollkörper (6) auf ihren Zapfen (5) begrenzt ist.

2. Tripodgelenk nach Anspruch 1, **dadurch gekennzeichnet, dass** die Rollflächen (20,21) der Rollkörper (6) Kugelkalotten sind, wobei der Kugelmittelpunkt (16) jeweils in der Mittenachse (9) der Zapfen (5) liegt, und dass die Rollbahnen (14,15) im Außenteil (1) Kreiszylinder sind, deren Krümmungsmittenachse (16) die Mittenachse (9) der Zapfen (5) im Wesentlichen kreuzt, wobei die Erzeugenden des Zylinders parallel zur Achse der Welle (3) sind, wenn die Welle (3) bezüglich des Außenteils (1) nicht ausgelenkt ist.

3. Tripodgelenk nach Anspruch 1, **dadurch gekennzeichnet, dass** die kugelkalottenförmigen Rollflächen (20,21) der Rollkörper (6) an ihren Umfangsrändern in Übergangsflächen (21') mit kleinerem Krümmungsradius übergehen.

4. Tripodgelenk nach Anspruch 3, **dadurch gekennzeichnet, dass** die Rollkörper (6) auf den Zapfen (5) mittels Nadellagern (10) vollnadelig gelagert sind.

5. Tripodgelenk nach Anspruch 1, **dadurch gekennzeichnet, dass** an den Rollkörpern (6) zur Beschränkung ihres Drehwinkels (30) zwei einander zugekehrte Anschlagflächen (24,25) ausgebildet sind, an denen mit dem Tripod (2) beziehungsweise der Welle (3) fest verbundene Sperrfinger (28) angreifen, die schmäler sind als der Abstand der Anschlagflächen (24,25) voneinander.

6. Tripodgelenk nach Anspruch 5, **dadurch gekennzeichnet, dass** die Anschlagflächen (24,25) an den Abflachungen (22) am Umfang der Rollkörper (6) als Seitenwände einer in Richtung der Mittelachse (9) der Zapfen (6) verlaufenden Nut (23) ausgebildet sind.

7. Tripodgelenk nach Anspruch 5, **dadurch gekennzeichnet, dass** die Sperrfinger (2) von einem Sperrring (7) abstehen, der mit der Welle (3) drehfest verbunden ist.

8. Tripodgelenk nach Anspruch 7, wobei das Tripod (2) mittels Kuppelzähnen (8) mit seiner Welle (3) drehfest verbunden ist, **dadurch gekennzeichnet, dass** der Sperrring (7) am Ende der Welle (3) mittels derselben Kuppelzähne (8) mit der Welle (3) formschlüssig verbunden ist.

9. Tripodgelenk nach Anspruch 7, wobei das Tripod (2) mittels Kuppelzähnen (8) mit seiner Welle (3) drehfest verbunden ist, **dadurch gekennzeichnet, dass** der Sperrring (7) an der der Welle (3) zugekehrten Seite des Tripod (2) angeordnet und mit der Welle (3) formschlüssig verbunden ist.

10. Tripodgelenk nach Anspruch 9, **dadurch gekennzeichnet, dass** der Sperrring (7) in die Welle (3) integriert ist.

## Claims

1. Joint of the tripod type comprising a tripod (2) torque transmittingly engaging a shaft (3) and an outer joint member (1), the tripod (2) having arms (5) whereon rollers (6) are rotatbly journalled, which rollers (6) are one-part and enclose the arms (5), and the outer joint member (1) has guiding grooves (14,15) for the rollers (6) on both sides of the rollers (6), **wherein** the rollers (6) have rolling surfaces (20,21) separated from each other in circumferential direction by flattenings (22) and wherein the angle of rotation (30) of the rollers (6) on the arms (5) is limited.

2. Joint of the tripod type according to claim 1, **wherein** the rolling surfaces (20,21) oft he rollers (6) are spheric calottes, the center (16) of the spheres being situated in the center line (9) oft he arms (5), and wherein the guiding grooves (14,15) in the outer joint member (1) are circular cylinders, the axis of curvature (16) thereof essentially crossing the center line (9) of the arms (5), the generatrixes of the cylinders being paralell to the axis of the shaft (3) when the shaft (3) is not inclined with regard to the outer joint member (1).

3. Joint of the tripod type according to claim 1, **wherein** the circumferential edges of the rolling surfaces (20,21) of the rollers (6), which are spheric calottes, form transitional surfaces (21') of a smaller radius of curvature.

4. Joint of the tripod type according to claim 3, **wherein** the rollers (6) are journalled on the arms (5) by needle bearings (10) all around the arms (5).

5. Joint of the tripod type according to claim 1, **wherein,** in order to limit the angle of rotation (30) of the rollers (6) on the arms (5), the rollers (6) have two stop faces (24,25) for interaction with locking fingers (28) which are fixed to the shaft (3) or to the tripod (2), as the case may be, and whose width is less than the distance between the stop faces (24,25).

6. Joint of the tripod type according to claim 5, **wherein** the stop faces (24,25) in the flattenings (22) are formed as side walls of a groove (23) directed parallel to the center line (9) of the arms (6).

7. Joint of the tripod type according to claim 5, **wherein** the locking fingers (28) radiate from a locking ring (7), which locking ring (7) is torque transmittingly engaged with shaft (3).

8. Joint of the tripod type according to claim 7, the tripod (2) being torque transmittingly engaged with shaft (3) by means of splines (8), **wherein** the locking ring (7) is positively engaged with the end of the shaft (3) by means of the same splines (8).

9. Joint of the tripod type according to claim 7, the tripod (2) being torque transmittingly engaged with shaft (3) by means of splines (8), **wherein** the locking ring (7) is located on the side oft he tripod (2) opposite the end of the shaft (3) and positively engaged with the shaft (3).

10. Joint of the tripod type according to claim 9, **wherein** the locking ring (7) is integral with the shaft (3).

## Revendications

1. Joint du type tripode comprenant un tripode (2) relié en rotation à un arbre (3) et un élément extérieur (1), le tripode (2) étant muni de pivots (5) sur lesquels sont montés en rotation des galets (6) indivisés enfermant les pivots (5), et l'élément extérieur (1) présentant des voies de roulement (14,15) pour les galets (6) de l'un coté et autre de ceux-ci (6), **caractérisé en ce que** les galets (6) forment des surfaces de roulement (20,21) séparées en direction circonférentielle par des aplatissements (22) et **en ce que** le l'angle de rotation (30) des galets (6) est limité.

2. Joint du type tripode selon la revendication 1, **caractérisé en ce que** les surfaces de roulement (20,21) des galets (6) sont des calottes sphériques, le centre (16) desquels sphères étant situé dans l'axe central des pivots (5), et **en ce que** les voies de roulement (14,15) dans l'élément extérieur (1) sont des cylindres circulaires dont l'axe central de courbure (16) croise les pivots (5), les génératrices des cylindres étant parallele à l'axe de l'arbre (3) lorsque l'arbre (3) n'est pas décalé en regard de l'élément extérieur (1).

3. Joint du type tripode selon la revendication 1, **caractérisé en ce que** les surfaces sphériques de roulement (20,21) des galets (6) passent, dans leur marges circonférentielles, à des surfaces transitoires d'un rayon de courbure inférieur.

4. Joint du type tripode selon la revendication 3, **caractérisé en ce que** les galets (6) sont montés pivotants sur les pivots (5) par moyen de paliers à aiguille (10).

5. Joint du type tripode selon la revendication 1, **caractérisé en ce que** les galets (6), dans le but de limiter leur angle de rotation (30), comportent deux surfaces d'arrêt (24, 25) l'une vis-à-vis de l'autre, ceux-ci coopérant avec un doigt d'arrêt (28) relié au tripode (2) oubien à l'arbre (3), la largeur de ce doigt d'arrêt (28) étant inférieur à la distance entre les surfaces d'arrêt (24, 25).

6. Joint du type tripode selon la revendication 5, **caractérisé en ce que** les surfaces d'arrêt (24, 25) sont conformés comme parois latérales d'une rainure (23) orienté dans la direction de l'axe central (9) des galets (6), les rainures (23) étant disposées dans les aplatissements (22) dans la conture des galets (6).

7. Joint du type tripode selon la revendication 5, **caractérisé en ce que** les doigts d'arrêt (28) s'étendent à partir d'une bague d'arrêt (7) relié par engagement positif à l'arbre (3).

8. Joint du type tripode selon la revendication 7, le tripode (2) étant relié à son arbre (3) moyennant des cannelures (8), **caractérisé en ce que** la bague d'arrêt (7) est positivement relié à l'arbre (3) moyennant les mêmes cannelures (8).

9. Joint du type tripode selon la revendication 7, le tripode (2) étant relié à son arbre (3) moyennant des cannelures (8), **caractérisé en ce que** la bague d'arrêt (7) est disposée du coté du tripode (2) façant l'arbre (3) et est positivement relié à l'arbre (3).

10. Joint du type tripode selon la revendication, **caractérisé en ce que** la bague d'arrêt (7) est intégrée dans l'arbre (3).
